## Europäisches Patentamt

## European Patent Office

## Office européen des brevets

(19)

(11) Veröffentlichungsnummer: **0 202 497**
**B1**

(12) **EUROPÄISCHE PATENTSCHRIFT**

(45) Veröffentlichungstag der Patentschrift:
25.07.90

(21) Anmeldenummer: 86105624.0

(22) Anmeldetag: 23.04.86

(51) Int. Cl.⁵: **G01B 17/02,** H01B 13/14,
G01N 29/04

(54) Temperaturkompensierte Ultraschall-Wanddickenmessung.

(30) Priorität: 26.04.85 DE 3515216

(43) Veröffentlichungstag der Anmeldung:
26.11.86 Patentblatt 86/48

(45) Bekanntmachung des Hinweises auf die Patenterteilung:
25.07.90 Patentblatt 90/30

(84) Benannte Vertragsstaaten:
AT BE CH DE FR GB IT LI LU NL SE

(56) Entgegenhaltungen:
EP-A- 0 105 020
DE-A- 1 573 617
DE-A- 2 505 221
FR-A- 2 234 545

PATENTS ABSTRACTS OF JAPAN, Band 8,
Nr. 92 (P-271) [1529], 27. April 1984; & JP - A - 59 7259

(73) Patentinhaber: Siemens Aktiengesellschaft,
Wittelsbacherplatz 2, D-8000 München 2(DE)

(72) Erfinder: Baumann, Joachim, Dr. Dipl.-Phys.,
Römerhofweg 51e, D-8046 Garching(DE)
Erfinder: Graf, Peter, Dipl.-Ing., Erikastrasse 7,
D-8012 Riemerling(DE)

ACTORUM AG

## Beschreibung

Die Erfindung betrifft eine Einrichtung zur zerstörungsfreien und berührungslosen prozeßintegrierten Ultraschall-Wanddickenmessung bei der Extrusion von Kunststoff-Mantel- und Isolierschichten für Kabel und Leitungen oder für die Extrusion von Kunststoffrohren.

Bei der Extrusion von Kunststoff-Schichten bei Kabel und Leitungen, sowie bei der Extrusion von Kunststoffrohren usw. wird angestrebt, die Dicke der extrudierten Schicht bzw. Wand direkt zu messen. Ein geeignetes Meßverfahren stellt die Ultraschallmessung nach dem Puls-Echo-Verfahren dar. Dabei geht die Schallgeschwindigkeit im zu prüfenden Material als Faktor in das Meßergebnis ein. Sie ist für Kunststoffe, wie Polyvinylchlorid (PVC), Polyäthylen (PE) und ähnliche Werkstoffe in nicht zu vernachlässigendem Maße temperaturabhängig. Dies wirkt sich insbesondere bei der direkten Messung im Fertigungsprozeß nach der Extrusion in der Kühlstrecke aus, wo zum Teil erhebliche Abweichungen von der Raumtemperatur sowie zusätzliche Temperaturgradienten in den zu messenden Schichten vorkommen.

Bei Messungen zu einem möglichst frühen Zeitpunkt nach der Extrusion ist eine Temperaturkompensation oder eine Korrektur der Dickenmeßwerte für genauere Messungen aber unerläßlich.

Es ist bekannt, Ultraschall-Wanddickenmessungen bei der Herstellung von Kabeln, Leitungen und Rohren durchzuführen. Bei diesen Meßsystemen wird aber keine Korrektur der Dickenmeßwerte aufgrund des Temperatureinflusses durchgeführt. Daher ist bei diesen Meßsystemen nur eine beschränkte Absolutgenauigkeit zu erreichen, und zwar insbesondere dann, wenn die Temperatur in der zu erfassenden Wandschicht nicht einheitlich ist, sondern ein bestimmtes Profil aufweist.

In Versuchsserien kann der Einfluß relativer Prozeßparameter auf die Ultraschall-Messung empirisch in Tabellen oder aufgestellten Funktionen erfaßt werden. Damit ist eine Korrektur der Ultraschallmessung beispielsweise mit Hilfe eines Mikroprozessors aber nur annäherungsweise mit beschränkter Genauigkeit möglich.

Aus dem Dokument EP-Al-0 105 020 ist eine Ultraschallmessung der Wandstärke von Kunststoffhohlkörpern bekannt, wobei die Kunststoffhohlkörper diskontinuierlich in einer geschlossenen Herstellungsform aufgeblasen werden und dabei ein Ultraschall-Wandler während des Herstellungsvorganges direkt an den entstehenden Kunststoffhohlkörper ankoppelt. Unmittelbar neben dem Ultraschall-Wandler mißt ein Temperaturfühler die Temperatur des Kunststoffhohlkörpers, so daß in einem entsprechenden Wanddickenmeßgerät die Temperaturabhängigkeit der Messung kompensiert werden kann.

Aus dem Dokument DE-A- 1 573 617 ist eine Anordnung der Ultraschall-Wanddickenmessung an heißen Oberflächen bekannt, bei welcher zwischen dem piezoelektrischen Wandler und der Kontaktfläche des Prüflings eine Vorlaufstrecke angeordnet ist. Zur Temperaturkompensation der Ultraschall-Wanddickenmessung wird dann ein Temperaturfühler in oder an dieser Vorlaufstrecke angeordnet.

Aus dem Dokument FR-A- 2 234 545 ist die berührungslose Ultraschall-Wanddickenmessung eines Rohres in einem flüssigen Kopplungsmedium mit zwei an dem zu messenden Rohr diametral gegenüberliegenden Ultraschallquellen bekannt. Um die Temperaturabhängigkeit des Ultraschalles im flüssigen Kopplungsmedium zu kompensieren ist innerhalb des Kopplungsmediums ein dritter Ultraschallwandler vorgesehen, welcher die Erzeugung eines Bezugssignals zur Kompensation von Temperaturschwankungen des Kopplungsmediums ermöglicht.

Der Erfindung liegt die Aufgabe zugrunde, eine Einrichtung zur zerstörungsfreien und berührungslosen prozeßintegrierten Ultraschall-Wanddickenmessung bei der Extrusion von Kunststoff-Mantel- und Isolierschichten für Kabel und Leitungen oder für die Extrusion von Kunststoffrohren zu schaffen, die eine dynamische Korrektur des Dickenmeßwertes zur Kompensation des Temperatureinflusses ermöglicht. Dabei soll auch dann eine hohe Absolutgenauigkeit der Messungen erzielt werden, wenn die Temperatur in der zu erfassenden Wandschicht nicht einheitlich ist, sondern ein bestimmtes Profil aufweist.

Die Lösung dieser Aufgabe erfolgt erfindungsgemäß durch

- eine Ultraschall-Meßvorrichtung, die über ein flüssiges Medium an die zu messende Schicht angekoppelt ist und ein von instationären Wärmeleitungen in der zu messenden Schicht und der Wanddicke der zu messenden Schicht abhängiges erstes Signal erzeugt;
- Mittel zur Erzeugung wenigstens eines zweiten Signals, welches von wenigstens einem Prozeßparameter abhängig ist und durch
- ein Rechenwerk zur dynamischen Verknüpfung des ersten Signals und des zweiten Signals zu einem temperaturkompensierten, korrigierten Dickenmeßwert.

Bei der erfindungsgemäßen Einrichtung werden instationäre Wärmeleitungen in der zu messenden Schicht also nicht durch direkte Temperaturmessungen am Ort der Ultraschallmessung sondern durch indirekte Erfassung über die Ermittlung von Prozeßparametern berücksichtigt. Dies hat den Vorteil, daß die Messung und Auswertung immer fallspezifisch ist und nicht nur von empirisch gefundenen Zusammenhängen abhängt. Es werden also die tatsächlich relevanten Zusammenhänge nicht nur empirisch sondern auch physikalisch formuliert und ausgenutzt.

Weitere Einzelheiten der Erfindung ergeben sich aus den abhängigen Ansprüchen und der dazugehörenden Beschreibung.

Die Erfindung wird anhand der Figuren erläutert. Es zeigen:

Figur 1 schematisch Extruder und Kühlwasserbad mit Ultraschall-Meßvorrichtung,

Figur 2 Extruder, Kühlwasserbad, Freistrecke und ein weiteres Wasserbad mit der Ultraschall-Meßvorrichtung und

Figur 3 Extruder, Kühlwasserbad und unmittelbar am Ende des Wasserbades angeordneter Ultraschall-Meßvorrichtung.

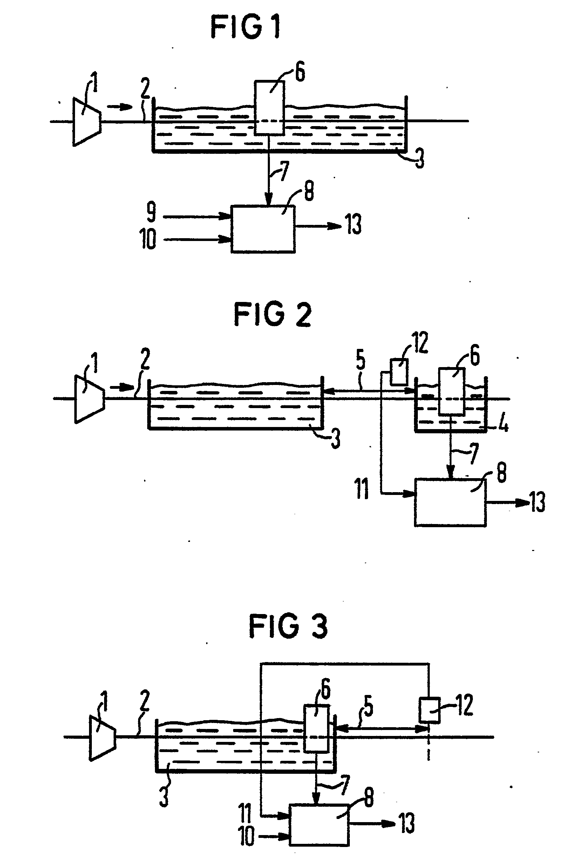

In den Figuren ist mit 1 der nur angedeutete Extruder bezeichnet, mit 2 das aus dem Extruder laufende Kabel bzw. die Leitung und mit 3 ein anschließendes Kühlwasserbad. Ein weiteres Wasserbad 4 ist nach einer Freistrecke 5 angeordnet. Eine Ultraschall-Meßvorrichtung in den Kühlwasserbädern ist mit 6 bezeichnet. Die ermittelten Werte 7 der Ultraschall-Meßvorrichtung werden einem Rechenwerk 8 zugeführt. In dieses Rechenwerk gelangen später erläuterte Meßwerte 9 und andere bekannte Parameter 10. Bei den Figuren 2 und 3 wird ferner ein besonderer Meßwert 11 aus einer mit 12 bezeichneten Meßvorrichtung, die nach der Freistrecke 5 positioniert ist, dem Rechenwerk zugeführt. Der korrigierte Wert ist mit 13 in diesen Figuren symbolisiert.

Dem Funktionsablauf nach den Figuren 1 bis 3 liegen folgende Überlegungen zugrunde:

Für Fälle, in denen die Manteltemperatur nicht unmittelbar meßbar ist (wie zum Beispiel in einem Kühlwasserbad), muß sie indirekt durch mathematische Verknüpfungen verschiedener Einflußgrößen bestimmt werden. Die meßbaren Größen wie Extrudertemperatur, Kühlwassertemperatur und Abzugsgeschwindigkeit sollen direkt erfaßt werden. Die nicht unmittelbar erfaßbaren Größen, wie Kabelinnentemperaturen, sollen nach Möglichkeit durch zusätzliche Meßgrößen, wie zum Beispiel Oberflächentemperatur an einem oder mehreren Orten der Produktionslinie, ersetzt werden.

Mit Hilfe eines geeigneten, mathematischen Kabelmodells kann eine numerische Simulation der Abkühlung unter Variation der im Prozeß veränderlichen Einflußgrößen durchgeführt werden. Man erhält einen Satz von Temperaturprofilen im Mantel mit den dazugehörigen Einflußgrößen aus Prozeßparametern, wobei insbesondere das Profil für den Ort der Ultraschallmessung von Bedeutung sind. Da die Schallgeschwindigkeit im interessierenden Bereich der Temperatur proportional ist, muß ihr Verlauf im Mantel gleich dem Temperaturverlauf (bei bekanntem Umrechnungsfaktor) sein. Durch Integration der reziproken Schallgeschwindigkeit über den Mantel und Umkehr des Ergebnisses erhält man die mittlere Schallgeschwindigkeit, die für die Ultraschallmessung relevant ist.

Jedem Satz von Prozeßparametern ist damit eine mittlere Schallgeschwindigkeit zugeordnet. Ziel ist es, die Schallgeschwindigkeit als Funktion der verschiedenen meßbaren Prozeßparameter in Form von Größengleichungen oder Tabellen zu erhalten und in einen Korrekturalgorithmus umzusetzen.

Es bietet sich die Festlegung eines Arbeitspunktes aus der am häufigsten vorkommenden Prozeßparameterkonstellation an, für den man die Schallgeschwindigkeit des Arbeitspunktes erhält. Durch gezielte Veränderung einzelner oder mehrerer Parameter kann man nun die Abweichungen von der Schallgeschwindigkeit im Prozeß ermitteln. Durch Linearisierung der Abweichung um den Arbeitspunkt erhält man ein vereinfachtes Modell der Schallgeschwindigkeit, falls die Genauigkeitsanforderungen dies zulassen.

Die Anzahl der Prozeßparameter kann je nach quantitativem Einfluß auf die Meßgenauigkeit verringert oder erweitert werden.

Nicht direkt meßbare Einflußgrößen, wie zum Beispiel die Kabelinnentemperatur vor der Extrudierung, können durch ihren zusätzlichen Effekt auf die Manteltemperatur charakterisiert und im Prozeß durch eine entsprechend veränderte Oberflächentemperatur außerhalb des Wasserbades erfaßt werden.

Die Realisierung zeigt Figur 1. Im Extruder 1 wird die Isolation bzw. der Mantel auf die Leitung bzw. das Kabel aufgebracht. Nach dem Durchlauf durch den Extruder gelangt die Leitung bzw. das Kabel zum Abkühlen der extrudierten Kunststoffschicht in das Wasserbad 3, worin sich auch die Ultraschallmeßvorrichtung 6 befindet. Die Ultraschallmessung geschieht an dem noch nicht vollständig abgekühlten Kabel bzw. Leitung aus dem Grund, damit eine Steuerung bzw. Regelung des Extruders mit möglichst kurzer Totzeit erfolgen kann. Die für eine genaue Dickenbestimmung erforderliche Kunststofftemperatur und die entsprechende Schallgeschwindigkeit können an dieser Stelle nicht direkt gemessen werden. Es ist jedoch möglich, durch Messung verschiedener Prozeßparameter 9, zum Beispiel Kühlwassertemperatur, Extrudattemperatur, Abzugsgeschwindigkeit und der verschiedenen Verweilzeiten des Kabels bzw. der Leitung in Luft bzw. Wasser und für den Produktionsprozeß charakteristische Produkt- und Prozeßparameter, die bekannt sind, in einer geeigneten mathematischen Verknüpfung mit dem unkorrigierten Dickenmeßwert 7 eine korrigierte Meßgröße 13 zu erhalten.

Für die Darstellung in der Figur 2 sind folgende Überlegungen maßgebend:

Es wird die Tatsache ausgenutzt, daß Kabel und Leitungen 2 mit schlecht wärmeleitender Oberfläche bei konvektionsarmer Luftkühlung so langsam Wärme nach außen abgeben, daß im Gegensatz zu einer Flüssigkühlung kein nennenswerter Temperaturgradient im Mantel zustande kommt bzw. ein vorhandener sich nach kurzer Zeit abbaut. Die an der Oberfläche gemessene Temperatur mit der Vorrichtung 12 (zum Beispiel durch Strahlungsthermometer) gibt dann recht gut die mittlere Manteltemperatur wieder. Aus der rechnerischen Simulation der Abkühlung erhält man den frühest möglichen Zeitpunkt bzw. die kürzest mögliche Freistrecke 5, bei der die obige Aussage gilt.

Führt man die Ultraschallmessung 6 in einem der Temperaturmessung 12 unmittelbar folgenden Wasserbad 4 aus, dessen Wassertemperatur mit der gemessenen Manteltemperatur 11 mitgeführt wird, bleibt letztere eine Zeitlang erhalten, so daß die Ultraschallmessung bei bekannter Manteltemperatur und somit bekannter Schallgeschwindigkeit erfolgt.

Sofern die Fertigungsparameter nicht sehr schnell schwanken, ist die Temperatur des Wasserbads 4 leicht nachführbar.

Ist das Wasserbad 4 sehr kurz, hat es bei schnellem Abzug des Kabels praktisch keinen Einfluß auf die Manteltemperatur und braucht deshalb nicht temperaturgeführt zu werden.

Eine noch schnellere Nachführung erreicht man durch den Einsatz einer Schwallkopplung der Ultraschall-Meßköpfe an dem Prüfling (nicht dargestellt), wobei das durchlaufende Medium (Wasser) aufgefangen und in einem Kreislauf wieder verwendet wird und dabei auf der Manteltemperatur gehalten wird. Bei Schwallankopplung ist der Einfluß des Wassers auf die Manteltemperatur noch geringer, jedoch ist diese Art von Kopplung für manche Prüflingstypen nicht leicht realisierbar.

Wo aus Platzgründen auf eine Luftstrecke zum Temperaturausgleich verzichtet werden muß, bietet sich eine schnellere Möglichkeit an, zu einer annähernd ausgeglichenen Manteltemperatur zu kommen. Ein beheiztes, flüssiges Medium 4 überträgt so viel Wärme an den Mantel, daß der Temperaturgradient von außen ausgeglichen wird.

Um den Fehler einer nicht exakt ausgeglichenen Manteltemperatur so klein wie möglich zu halten, ist die Temperatur des beheizten Mediums entsprechend der im Kabel gespeicherten Wärme zu optimieren. Das flüssige Medium kann gleichzeitig auch Kopplungsmedium der Ultraschallmessung sein.

Der Funktionsablauf nach Figur 3 unterscheidest sich in folgenden Punkten von den oben beschriebenen Verfahren:

Es wird ebenso von der Tatsache ausgegangen, daß nach einer charakteristischen Freistrecke 5 die Außentemperatur des Mantels, die mit der Vorrichtung 12 gemessen wird, eine mittlere Kabeltemperatur am Ende des Wasserbades 3 ermittelt werden kann. An diesem Ende des Wasserbades ist daher die Ultraschall-Meßvorrichtung 5 positioniert. Mit Hilfe der durch die Vorrichtung 12 gemessenen Oberflächentemperatur 11 und prozeßspezifischer Größen 10 können in einem Rechenwerk 8 die unkorrigierten Meßwerte 7 zum korrigierten Dickenwert 13 verwandelt werden.

Mit den Werten am Ausgang 13 kann eine Steuerung bzw. Regelung des Extruders 1 vorgenommen werden.

## Patentansprüche

1. Einrichtung zur zerstörungsfreien und berührungslosen, prozeßintegrierten Ultraschall-Wanddickenmessung bei der Extrusion von Kunststoff-Mantel- und Isolierschichten für Kabel und Leitungen oder für die Extrusion von Kunststoffrohren, gekennzeichnet durch
- eine Ultraschall-Meßvorrichtung (6), die über ein flüssiges Medium (3, 4) an die zu messende Schicht angekoppelt ist und ein von instationären Wärmeleitungen in der zu messenden Schicht und der Wanddicke der zu messenden Schicht abhängiges erstes Signal (7) erzeugt;
- Mittel (12) zur Erzeugung wenigstens eines zweiten Signals (9, 10, 11), welches von wenigstens einem Prozeßparameter abhängig ist und durch

- ein Rechenwerk (8) zur dynamischen Verknüpfung des ersten Signals (7) und des zweiten Signals (9, 10, 11) zu einem temperaturkompensierten, korrigierten Dickenmeßwert (13).

2. Einrichtung nach Anspruch 1, dadurch gekennzeichnet, daß die Ultraschall-Meßvorrichtung (6) über ein direkt an den Extruder (1) anschließendes Kühlwasserbad (3) an die zu messende Schicht angekoppelt ist.

3. Einrichtung nach Anspruch 1, dadurch gekennzeichnet, daß die Ultraschall-Meßvorrichtung (6) über ein spezielles Wasserbad (6) an die zu messende Schicht angekoppelt ist, wobei das spezielle Wasserbad (4) nach einer vorgegebenen Strecke (5) hinter einem sich an den Extruder (1) anschließenden Kühlwasserbad (3) angeordnet ist.

4. Einrichtung nach Anspruch 2, dadurch gekennzeichnet, daß das zweite Signal (9, 10, 11) von wenigstens einem der folgenden Prozeßparameter abhängig ist: Kühlwassertemperatur, Extrudattemperatur, Oberflächentemperatur des Prüfgutes, Abzugsgeschwindigkeit des Prüfgutes aus dem Extruder (1), Verweilzeit des Prüfgutes in Luft oder Wasser.

5. Einrichtung nach Anspruch 4, dadurch gekennzeichnet, daß die Ultraschall-Meßvorrichtung (6) am auslaufseitigen Ende eines Kühlwasserbades (3) angeordnet ist und daß eine Meßvorrichtung (12) zur Erfassung der Oberflächentemperatur des Prüfgutes nach einer vorgegebenen Strecke (5) außerhalb des Kühlwasserbades (3) angeordnet ist.

6. Einrichtung nach Anspruch 3, dadurch gekennzeichnet, daß eine Meßvorrichtung (12) zur Erfassung der Oberflächentemperatur des Prüfgutes nach einer vorgebbaren Strecke (5) außerhalb des Kühlbades (3) angeordnet ist und daß das spezielle Wasserbad (4) unmittelbar nach der Meßvorrichtung (12) angeordnet ist.

## Claims

1. Device for non-destructive and contactless, process-integrated ultrasonic wall thickness measurement in the extrusion of plastic sheathing and insulating layers for cables and lines or for the extrusion of plastic pipes, characterized by
- an ultrasonic measuring device (6), which is coupled via a liquid medium (3, 4) to the layer to be measured, and generates a first signal (7) dependent upon non-stationary thermal conductances in the layer to be measured and upon the wall thickness of the layer to be measured;
- means (12) for generating at least one second signal (9, 10, 11), which is dependent upon at least one process parameter; and by
- an arithmetic-logic unit (8) for dynamically combining the first signal (7) and the second signal (9, 10, 11) into a temperature-compensated corrected measured thickness value (13).

2. Device according to Claim 1, characterized in that the ultrasonic measuring device (6) is coupled, via a cooling-water bath (3) directly connected to the extruder (1), to the layer to be measured.

3. Device according to Claim 1, characterized in that the ultrasonic measuring device (6) is coupled via a special water bath (6) to the layer to be measured, the special water bath (4) being arranged at a predetermined distance (5) behind a cooling-water bath (3) connected to the extruder (1).

4. Device according to Claim 2, characterized in that the second signal (9, 10, 11) is dependent upon at least one of the following process parameters: cooling-water temperature, extrudate temperature, surface temperature of the test specimen, rate of withdrawal of the test specimen from the extruder (1), dwell time of the test specimen in air or water.

5. Device according to Claim 4, characterized in that the ultrasonic measuring device (6) is arranged at the outlet end of a cooling-water bath (3), and in that a measuring device (12) for sensing the surface temperature of the test specimen is arranged at a predetermined distance (5) outside the cooling-water bath (3).

6. Device according to Claim 3, characterized in that a measuring device (12) for sensing the surface temperature of the test specimen is arranged at a predetermined distance (5) outside the cooling-bath (3), and in that the special water bath (4) is arranged directly after the measuring device (12).

**Revendications**

1. Dispositif pour réaliser la mesure non destructive, sans contact, exécutée d'une manière intégrée, de l'épaisseur de parois à l'aide d'ultrasons, lors de l'extrusion de gaines et de couches isolantes en matière plastique pour des câbles et des conducteurs ou pour l'extrusion de tubes en matière plastique, caractérisé par

— un dispositif (6) de mesure par ultrasons, qui est couplé par l'intermédiaire d'un milieu liquide (3, 4) à la couche à mesurer et produit un premier signal (7) qui dépend de conductions thermiques instables dans la couche à mesurer et de l'épaisseur de la paroi de cette couche;

— des moyens (12) servant à produire au moins un second signal (9, 10, 11), qui dépend d'au moins un paramètre du processus, et par

— une unité de calcul (8) servant à combiner de façon dynamique le premier signal (7) et le second signal (9, 10, 11) pour former une valeur de mesure de l'épaisseur (13), compensée en température et corrigé.

2. Dispositif suivant la revendication 1, caractérisé par le fait que le dispositif (6) de mesure par ultrasons est couplé à la couche à mesurer par l'intermédiaire d'un bain d'eau de refroidissement (3) faisant directement suite à l'extrudeuse (1).

3. Dispositif suivant la revendication 1, caractérisé par le fait que le dispositif (6) de mesure par ultrasons est couplé à la couche à mesurer par l'intermédiaire d'un bain d'eau particulier (4), qui est prévu, à la suite d'une distance prédéterminée (5), en arrière d'un bain d'eau de refroidissement (3) qui fait suite à l'extrudeuse (1).

4. Dispositif suivant la revendication 2, caractérisé par le fait que le second signal (9, 10, 11) dépend d'au moins l'un des paramètres suivants du processus: température de l'eau de refroidissement, température du produit extrudé, température superficielle du produit à contrôler, vitesse de tirage du produit à contrôler hors de l'extrudeuse (1), temps de séjour du produit à contrôler dans l'air ou dans l'eau.

5. Dispositif suivant la revendication 4, caractérisé par le fait que le dispositif (6) de mesure par ultrasons est disposé à l'extrémité, côté sortie, d'un bain d'eau de refroidissement (3) et qu'un dispositif de mesure (12) servant à détecter la température superficielle du produit à contrôler est disposé, en aval d'une distance prédéterminée (5), à l'extérieur du bain d'eau de refroidissement (3).

6. Dispositif suivant la revendication 3, caractérisé par le fait qu'un dispositif de mesure (12) servant à détecter la température superficielle du produit à contrôler est disposé, en aval d'une distance pouvant être prédéterminée (5), à l'extérieur du bain de refroidissement (3) et que le bain d'eau particulier (4) est disposé directement en aval du dispositif de mesure (12).

# FIG 1

# FIG 2

# FIG 3